# EUROPÄISCHE PATENTSCHRIFT

(11) **EP 2 072 554 B1**
(45) Veröffentlichungstag und Bekanntmachung des Hinweises auf die Patenterteilung: **28.08.2019**
(21) Anmeldenummer: 08021775.5
(22) Anmeldetag: 16.12.2008
(51) Int. Cl.: C08G 18/62, C08K 3/34, C09D 175/04, C08F 220/20, C08K 3/14, C08K 3/20, C08K 3/28, C08K 3/38

(54) **NANOPARTIKELHALTIGE BINDEMITTEL**
ADHESIVE MATERIAL CONTAINING NANOPARTICLES
LIANT CONTENANT DES NANOPARTICULES

(30) Priorität: 19.12.2007 DE 102007061876
(43) Veröffentlichungstag der Anmeldung: 24.06.2009
(73) Patentinhaber: Covestro Deutschland AG, 51373 Leverkusen (DE)
(72) Erfinder: Mager, Michael Dr., 51375 Leverkusen (DE); Mechtel, Markus Dr., 51467 Bergisch Gladbach (DE); Yuva, Nusret, 51399 Burscheid (DE); Münzmay, Alice, 41539 Dormagen (DE); Münzmay, Thomas, Dr., deceased (DE)
(74) Vertreter: Levpat

(56) Entgegenhaltungen:
- EP-A2- 1 702 954
- WO-A1-99/58589
- WO-A1-2006/008120
- US-B1- 6 180 175

## Beschreibung

Die vorliegende Erfindung betrifft wässrige Bindemitteldispersionen auf Basis von silan-modifizierten polymeren Bindemitteln und anorganischen Nanopartikeln, ein Verfahren zu deren Herstellung und deren Verwendung zur Herstellung hochwertiger Beschichtungen, insbesondere Klarlacken.

Nanopartikel in polymeren Beschichtungen können Eigenschaften wie Kratzfestigkeit, UV-Schutz oder Leitfähigkeit gezielt verbessern. Die Kontrolle von Oberflächenmodifizierung und Dispergierung der Nanopartikel bestimmen das erforderliche transparente Erscheinungsbild der Beschichtungen sowie deren Eigenschaften.

Zur Einbringung der Nanopartikel in Beschichtungsmittelformulierungen sind in der Vergangenheit unterschiedliche Ansätze verfolgt worden. Dabei können die Partikel direkt in die Harz- oder Härterkomponente oder in die applikationsfertige Beschichtungsmittel eingemischt werden. Bei wässrigen Systemen besteht die Möglichkeit der Dispergierung der Partikel in die wässrige Phase. Ferner sind die in-situ Herstellung der Partikel in einer der Bindemittelkomponenten und eine Oberflächenanpassung entweder an die Harz oder die Härterkomponente beschrieben worden.

Aus praktischer Sicht ist es vorteilhaft, die Nanopartikel als stabile Masterbatche in einer der Komponenten zu dispergieren, so dass eine langfristige Lagerstabilität und eine einfache Handhabbarkeit bei der Formulierung von Lacken gewährleistet ist. In der Endanwendung müssen die Nanopartikel ebenfalls gut und feinteilig dispergiert sein, damit sich vorteilhafte Eigenschaften wie Transparenz, Kratzfestigkeit oder Leitfähigkeit ergeben.

Üblicherweise werden die Nanopartikel in der Praxis in die Harzkomponente, in die wässrige Phase bzw. in die fertige Mischung aus Härter und Harz kurz vor der Aushärtung eindispergiert. In der Regel ist es dazu erforderlich, die Oberfläche der Nanopartikel an die spezifische Matrix des Beschichtungsmittels bzw. des Klebstoffs anzupassen. Nachteil einer einfachen Einmischung modifizierter Nanopartikel ist die Abhängigkeit der Stabilität von der vollständigen Formulierung, d.h. von allen Formulierungsbestandteilen. Die Variation eines Parameters kann hier zur Entmischung führen (Pilotek, Steffen; Tabellion, Frank (2005), European Coatings Journal, 4, 170ff).

Aus dem Stand der Technik ist bekannt, dass sich Beschichtungsmittel mit Silanen modifizierten Nanopartikeln herstellen lassen. In der WO-A 02/24756 werden beispielsweise Beschichtungsmittel auf Basis von Suspensionspolymerisaten und Silan-modifizierten Nanopartikeln offenbart. Bei den dort beschriebenen Polymerisaten handelt es sich jedoch um Suspensions- und Emulsionspolymere. Die Suspensionspolymerisation wird wie die Emulsionspolymerisation in wässriger Phase durchgeführt. Das Endprodukt der Suspension sind Feststoffkügelchen, die aus der wässrigen Phase abfiltriert werden.

In der WO-A 2006/008120 werden wässrige Dispersionen aus polymeren und/oder oligomeren organischen Bindemitteln und anorganischen Nanopartikeln beschrieben. Die Nanopartikel werden durch Zusatz von Silan-funktionellen Verbindungen oberflächenmodifiziert. Nachteilig ist hier jedoch, dass der Glanz und Haze der resultierenden Beschichtungen nicht den hohen Anforderungen der Automobilklarlacke genügt.

WO-A 03/095532 offenbart wässrige Dispersionen von hydrophilierten Polymeren oder Oligomeren, die oberflächenmodifizierte anorganische Nanopartikel sowie mindestens ein Amphiphil enthalten. Mögliche hydrophile Polymere sind Emulsionspolymersiate, die in wässriger Phase hergestellt werden. Nachteilig ist der Einsatz der gemäß dieser Lehre notwendigen Amphiphile, da diese niedermolekularen Alkohole als Lösemittel in die VOC-Bilanz (volatile organic compounds) einbezogen werden müssen. Des Weiteren handelt es sich dabei um hoch reaktive Mono- oder Polyolverbindungen, welche bei der Vernetzung der Bindemittel beispielsweise mit Polyisocyanaten mit reagieren und zu Minderfunktionalität bis hin zum Kettenabbruch führen. Der dadurch gestörte Netzwerkaufbau der resultierenden Lacke führt zur Minderung der Beständigkeiten. Das Dokument EP 1 702 954 A2 offenbart wässrige Copolymerisatdispersionen mit niedrigem Lösemittelgehalt auf Basis von hydroxyfunktionellen Copolymerisaten, ein Verfahren zu deren Herstellung, Bindemittelkombinationen auf dieser Basis und die Verwendung der Bindemittel für kratzfeste Beschichtungen. Laut Absatz [0051] sind die wässrige Copolymerisatdispersionen zur Herstellung von lösemittelarmen Grundierungen, Füllen, pigmentierter oder transparenter Decklacke, Klarlacke und Hochglanzlacke sowie Einschichtlacken, z.B. im Bereich der Industrielackierung, Automobilerst- und Reparaturlackierung geeignet.

Überraschend wurde nun gefunden, dass wässrige Copolymerisate, welche mit einer bestimmten Klasse von Silanen modifiziert sind, in Kombination mit anorganischen Nanopartikeln, zur Herstellung von Beschichtungen mit deutlich verbesserter Kratzbeständigkeit bei ausgezeichnetem Glanz und sehr niedrigem Haze (Trübheit) geeignet sind.

Die Aufgabe der vorliegenden Erfindung bestand somit in der Bereitstellung von hochwertigen Beschichtungsmitteln, insbesondere als Automobil-Klarlacke, die einen optimalen Glanz und Haze aufweisen und eine verbesserte Kratzfestigkeit zeigen. Des Weiteren sollten die Dispersionen ausreichend lagerstabil sein.

Gegenstand der vorliegenden Erfindung sind daher wässrige Zubereitungen enthaltend
A) ein Silan-modifiziertes Copolymerisat, wobei es erfindungswesentlich ist, dass besagtes Copolymerisat aufgebaut ist, wie unter Ausführungsform (α), (β) oder (γ) nachfolgend beschrieben,
B) anorganische Partikel, welche gegebenenfalls oberflächenmodifiziert sind, mit einer mittels dynamischer Lichtstreuung in Dispersion bestimmten mittleren Partikelgröße (Z-Mittelwert) von kleiner als 200 nm sowie
C) Wasser.

Das Silan-modifizierte Copolymerisat A) enthält Gruppen der allgemeinen Formel (1)

-Si(R¹O)₂R² (1)

in welcher
- R¹: ein C₂- bis C₈-Alkyl-, bevorzugt ein C₃- bis C₆-Alkylrest ist und
- R²: gleich (R¹O) oder ein C₁- bis C₈-Alkyl-, bevorzugt gleich (R¹O) oder ein C₁- bis C3-Alkylrest ist.

Die erfindungsgemäßen wässrigen Zubereitungen enthalten 20 bis 59 Gew.-Teile, bevorzugt 25 bis 48 Gew.-Teile und besonders bevorzugt 27,5 bis 40 Gew.-Teile Copolymerisat A), 1 bis 40 Gew.-Teile, bevorzugt 2 bis 25 Gew.-Teile und besonders bevorzugt 2,5 bis 15 Gew.-Teile anorganische Nanopartikel B), 5 bis 44 Gew.-Teile, bevorzugt 10 bis 33 Gew.-Teile und besonders bevorzugt 12,5 bis 25 Gew.-Teile Vernetzer C) und 35 bis 74 Gew.-Teile, bevorzugt 40 bis 63 Gew.-Teile und besonders bevorzugt 45 bis 57,5 Gew.-Teile Wasser D).

In einer ersten Ausführungsform (α) ist die Komponente A) ein Copolymerisat, das aufgebaut ist aus
I) einem hydroxyfunktionellen, hydrophoben Polymerisat, enthaltend als Aufbaumonomere
   Ia) (Meth)-acrylsäureester mit C₁- bis C₁₈-Kohlenwasserstoffresten im Alkoholteil und/oder Vinylaromaten und/oder Vinylester,
   Ib) hydroxyfunktionelle Monomere und
   IS1) Silan-funktionelle, zur Polymerisation befähigte Monomere sowie
II) einem hydroxyfunktionellen, hydrophilen Polymerisat, enthaltend als Aufbaukomponenten
   IIa) (Meth)-acrylsäureester mit C₁- bis C₁₈-Kohlenwasserstoffresten im Alkoholteil und/oder Vinylaromaten und/oder Vinylester,
   IIb) hydroxyfunktionelle Monomere und
   IIc) säurefunktionelle Monomere.

Diese Ausführungsform (α) ist bevorzugt.

In einer weiteren Ausführungsform (β) ist die Komponente A) ein Copolymerisat, das aufgebaut ist aus
I) einem hydroxyfunktionellen, hydrophoben Polymerisat, enthaltend als Aufbaumonomere
   Ia) (Meth)-acrylsäureester mit C₁- bis C₁₈-Kohlenwasserstoffresten im Alkoholteil und/oder Vinylaromaten und/oder Vinylester,
   Ib) hydroxyfunktionelle Monomere sowie
II) einem hydroxyfunktionellen, hydrophilen Polymerisat, enthaltend als Aufbaukomponenten
   IIa) (Meth)-acrylsäureester mit C₁- bis C₁₈-Kohlenwasserstoffresten im Alkoholteil und/oder Vinylaromaten und/oder Vinylester,
   IIb) hydroxyfunktionelle Monomere,
   IIc) säurefunktionelle Monomere und
   IIS1) Silan-funktionelle, zur Polymerisation befähigte Monomere.

Der Anteil der Monomere Ia)/IIa) am Copolymerisat A) in den Ausführungsformen (α) und (β) beträgt 34,3 bis 89,3 Gew.-Teile, bevorzugt 51,8 bis 84,8 Gew.-Teile und besonders bevorzugt 58 bis 81 Gew.-Teile, der Anteil der Monomere Ib)/IIb) am Copolymerisat A) beträgt 10 bis 65 Gew.-Teile, bevorzugt 13,5 bis 46,5 Gew.-Teile und besonders bevorzugt 17 bis 40 Gew.-Teile, der Anteil der Monomere IIc) am Copolymerisat A) beträgt 0,6 bis 12 Gew.-Teile, bevorzugt 1,2 bis 5,5 Gew.-Teile und besonders bevorzugt 1,25 bis 3,5 Gew.-Teile und der Anteil der Monomere IS1)/IIS1) am Copolymerisat A) beträgt 0,1 bis 12 Gew.-Teile, bevorzugt 0,5 bis 5 Gew.-Teile und besonders bevorzugt 0,75 bis 3,5 Gew.-Teile.

Geeignete, Silan-funktionelle, zur Polymerisation befähigte Monomere IS1) sowie IIS1) sind z.B. Verbindungen der allgemeinen Formel (2)

(R¹O)₂R²Si-(CH=CH₂) (2)

in welcher
- R¹: ein C₂- bis C₈-Alkyl-, bevorzugt ein C₃- bis C₆-Alkylrest ist,
- R²: gleich (R¹O) oder ein C₁- bis C₅-Alkyl-, bevorzugt gleich (R¹O) oder ein C₁- bis C3-Alkylrest ist,
und/oder Verbindungen der allgemeinen Formel (3)

(R¹O)₂R²Si(CH₂)ₘ-O(CO)-(CR³=CH₂) (3)

in welcher
- R¹: ein C₂- bis C₈-Alkyl-, bevorzugt ein C₃- bis C₆-Alkylrest ist,
- R²: gleich (R¹O) oder ein C₁- bis C₅-Alkyl-, bevorzugt gleich (R¹O) oder ein C₁- bis C3-Alkylrest ist,
- R³: gleich H oder CH₃ ist und
- m: 1 bis 4, bevorzugt 3 ist.

Beispiele für geeignete, Silan-funktionelle, zur Polymerisation befähigte Monomere IS1) sowie IIS1) sind Vinyltriethoxysilan, Vinyltrisisopropoxysilan, Vinyl-tris-(2-methoxy)silan, Vinylmethyldiethoxysilan, Vinylmethyldiisopropoxysilan, Vinylethyldiethoxysilan, 3-(Triethoxysilyl)-propylmethacrylat oder 3-(Tris-isopropoxysilyl)-propylmethacrylat, Vinylphenyldiethoxysilan, Vinylphenylmethylethoxysilan oder Vinyltri-t-butoxysilan. Bevorzugt ist Vinyltrisisopropoxysilan.

Es ist ebenfalls möglich, dass die Komponente A) (Ausführungsform (γ)) ein Copolymerisat ist, das aufgebaut ist aus
I) einem hydroxyfunktionellen, hydrophoben Polymerisat, enthaltend als Aufbaumonomere
   Ia) (Meth)-acrylsäureester mit C₁- bis C₁₈-Kohlenwasserstoffresten im Alkoholteil und/oder Vinylaromaten und/oder Vinylester,
   Ib) hydroxyfunktionelle Monomere,
II) einem hydroxyfunktionellen, hydrophilen Polymerisat, enthaltend als Aufbaukomponenten
   IIa) (Meth)-acrylsäureester mit C₁- bis C₁₈-Kohlenwasserstoffresten im Alkoholteil und/oder Vinylaromaten und/oder Vinylester,
   IIb) hydroxyfunktionelle Monomere,
   IIc) säurefunktionelle Monomere und
   IIS2) Monomere, welche neben Silan-Gruppen mindestens eine Epoxid-Funktion enthalten.

Der Anteil der Monomere Ia)/IIa) am Copolymerisat A) in der Ausführungsform (γ) beträgt 33,8 bis 88,8 Gew.-Teile, bevorzugt 49,1 bis 83,9 Gew.-Teile und besonders bevorzugt 56 bis 79,5 Gew.-Teile, der Anteil der Monomere Ib)/IIb) am Copolymerisat A) beträgt 10 bis 65 Gew.-Teile, bevorzugt 13,5 bis 48,3 Gew.-Teile und besonders bevorzugt 17 bis 40,5 Gew.-Teile, der Anteil der Monomere IIc) am Copolymerisat A) beträgt 1 bis 15 Gew.-Teile, bevorzugt 1,85 bis 8 Gew.-Teile und besonders bevorzugt 2,5 bis 6,5 Gew.-Teile und der Anteil der Monomere IIS2) am Copolymerisat A) beträgt 0,2 bis 12 Gew.-Teile, bevorzugt 0,75 bis 5,5 Gew.-Teile und besonders bevorzugt 1 bis 4,5 Gew.-Teile.

Beispiele für geeignete Monomere IIS2), welche neben Silan-Gruppen mindestens eine Epoxid-Funktion enthalten sind γ-Glycidoxypropyltriethoxysilan, γ-Glycidoxypropyl-tris-isopropoxysilan, γ -Glycidoxypropyl-diethoxy-methylsilan, Glycidoxypropyl-di-isopropoxy-methylsilan, β-(3,4-Epoxycyclohexyl)-triethoxysilan, β-(3,4-Epoxycyclohexyl)-tris-isopropoxysilan, β-(3,4-Epoxycyclohexyl)-diethoxy-methylsilan, β-(3,4-Epoxycyclohexyl)-di-isopropoxy-methylsilan, β-(3,4-Epoxycyclohexyl)-diethoxy-ethylsilan oder β-(3,4-Epoxycyclohexyl)-di-isopropoxyethylsilan. Bevorzugt ist γ-Glycidoxypropyltriethoxysilan, γ-Glycidoxypropyl-tris-isopropoxysilan, γ -Glycidoxypropyl-diethoxy-methylsilan, β-(3,4-Epoxycyclohexyl)-triethoxysilan oder β-(3,4-Epoxycyclohexyl)-tris-isopropoxysilan, besonders bevorzugt sind γ-Glycidoxypropyl-tris-isopropoxysilan, γ-Glycidoxypropyl-diethoxy-methylsilan und β-(3,4-Epoxycyclohexyl)-tris-isopropoxysilan.

Geeignete Monomere Ia)/IIa) sind die Veresterungsprodukte von Acryl- oder Methacrylsäure mit einfachen Akloholen z.B. Ethylacrylat, Ethylmethacrylat, n-Butylacrylat, iso-Butylacrylat, tert-Butylacrylat, 2-Ethylhexylacrylat, 2-Ethylhexyl-methacrylat, Methylmethacrylat, n-Butylmethacrylat, iso-Butylmethacrylat, tert-Butylmethacrylat, Cyclohexylacrylat oder Cyclohexylmethacrylat, sowie Vinylphenyle wie Styrol, Vinyltoluol, α-Methylstyrol bzw. Mischungen dieser und anderer Monomere.

Weitere als Monomere Ia)/IIa) geeignete Verbindungen vom Typ (Meth)Acrylsäureester sind die Ester von Acrylsäure oder Methacrylsäure mit linearen, aliphatischen Monoolen mit acht Kohlenstoffatomen wie z.B. die so genannten Fett-Alkohole (Monoolen) oder mit linearen, aliphatischen, gesättigten Alkoholen, die sich von natürlich vorkommenden Fettsäuren ableiten wie Lauryl- (C₁₂), Myristyl- (C₁₄), Palmityl- (C₁₆) oder Stearyl- (C₁₈) Alkohol. Ebenfalls geeignete aliphatische, gesättigte Alkohole sind z.B. n-Octanol, Nonanol oder n-Decanol. Geeignete Monomere vom Typ (Meth)Acrylsäureester, die einen aliphatischen Rest mit mindestens acht Kohlenstoffatomen enthalten sind z.B. n-Octylacrylat, Nonylacrylat, n-Decylacrylat, Laurylacrylat, Myristylacrylat, Palmitylacrylat, Stearyacrylat, sowie die entsprechenden Methacrylsäurederivate.

Weiterhin geeignet als Monomere des vorgenannten Typs sind Ester der Acrylsäure oder Methacrylsäure mit cycloaliphatischen Alkoholen (Monoolen) mit mindestens 10 Kohlenstoffatomen wie z.B. i-Bornylacrylat, i-Bornylmethacrylat, Dihydroxydicyclopentadienylacrylat oder 3,3,5-Trimethylcyclohexyl-methacrylat.

Geeignete Monomere Ia/IIa) sind weiterhin die Versterungsprodukte von Vinylalkohol mit linearen oder verzweigten, aliphatischen Corbonsäuren wie beispielsweise Vinylacetat, Vinylpropionat oder Vinylbutyrat. Bevorzugt sind die Vinylester verzweigter, aliphatischer Carbonsäuren der allgemeinen Formel (4), 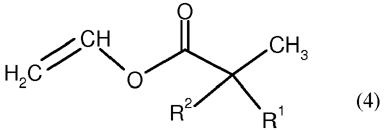 in welcher R¹ und R² gesättigte Alkylgruppen sind, enthaltend zusammen 6, 7 oder 8 C-Atome, entsprechend der Verbindungen VeoVa™ (Hexion Specialty Chemicals, USA) 9, 10 und 11.

Die genannten Monomere unterscheiden sich hinsichtlich der Glastemperatur ihrer Homopolymere:

| **Monomer** | **T_{G} [°C]** |
|---|---|
| VeoVa™ 9 | + 70 |
| VeoVa™ 10 | - 3 |
| VeoVa™ 11 | - 40 |

Bevorzugt als Monomere Ia)/IIa) sind n-Butylacrylat, iso-Butylacrylat, tert-Butylacrylat, 2-Ethylhexylacrylat, Methylmethacrylat, n-Butylmethacrylat, iso-Butylmethacrylat, tert-Butylmethacrylat, Cyclohexylacrylat, Cyclohexylmethacrylat, i-Bornylacrylat, i-Bornylmethacrylat sowie Styrol, besonders bevorzugt sind n-Butylacrylat, 2-Ethylhexylacrylat, Methylmethacrylat, n-Butylmethacrylat, tert-Butylmethacrylat, Cyclohexylmethacrylat, i-Bornylacrylat, i-Bornylmethacrylat sowie Styrol.

Optional können auch weitere zur radikalischen Copolymerisation befähigte Monomere als Verbindungen der Komponente Ia/IIa) bei der Herstellung von Copolymerisat A) eingesetzt werden. Dies können beispielsweise Derivate der Acryl- oder Methacrylsäure wie Acrylamid, Methacrylamid, Acrylnitril oder Methacrylnitril sein. Weiterhin optional möglich sind Vinylether oder Vinylacetate. Als weitere gegebenenfalls in untergeordneten Mengen einzusetzende Komponenten Ia/IIa) kommen di- oder höher-funktionelle (Meth)acrylatmonomere und/oder Vinylmonomere, wie z.B. Hexandioldi(meth)acrylat oder Divinylbenzol in Frage.

Geeignete hydroxyfunktionelle Monomere Ib)/IIb) sind z.B. 2-Hydroxyethylmethacrylat, 2-Hydroxypropylmethacrylat, 2-Hydroxyethylacrylat, 2-Hydroxypropylacrylat, 4-Hydroxybutylacrylat oder 4-Hydroxybutylmethacrylat. Bevorzugte Monomere Ib)/IIb) sind 2-Hydroxyethylacrylat, 2-Hydroxyethylmethacrylat, 2-Hydroxypropylmethacrylat oder 4-Hydroxybutylacrylat sowie Mischungen dieser Verbindungen.

Geeignete olefinisch ungesättigte, säurefunktionelle Monomere IIc) sind sulfon- oder carbonsäurefunktionelle Monomere, bevorzugt carbonsäurefunktionelle Monomere wie Acrylsäure, Methacrylsäure, β-Carboxyethylacrylat, Crotonsäure, Fumarsäure, Maleinsäureanhydrid, Itaconsäure oder Monoalkylester zweibasiger Säuren bzw. Anhydride wie z.B. Maleinsäure-monoalkylester, bevorzugt sind Acryl- oder Methacrylsäure.

Ferner geeignet als Verbindungen der Komponente IIc) sind auch ungesättigte, radikalisch polymerisierbare Verbindungen mit Phosphat- bzw. Phosphonat- oder Sulfonsäure- bzw. Sulfonatgruppen, wie z.B. in der WO-A 00/39181 (S. 8, Z. 13 - S. 9, Z. 19) beschrieben werden.

Als Initiatoren für die Polymerisationsreaktion eignen sich organische Peroxide wie Di-tert.-Butylperoxid oder tert.-Butylperoxy-2-ethylhexanoat und Azoverbindungen wie Azodiisobuttersäurenitril (AIBN). Die eingesetzten Initiatormengen hängen vom gewünschten Molekulargewicht ab. Aus Gründen der Prozesssicherheit und des leichteren Handlings können Peroxidinitiatoren auch als Lösung in geeigneten organischen Lösemitteln der unten genannten Art eingesetzt werden.

Die Herstellung des Copolymerisats A) erfolgt durch eine radikalisch initiierte Copolymerisation der Monomermischung I) und II) in organischen Lösemittel(gemischen). Die Menge an organischen Lösemitteln wird so bemessen, dass die resultierenden Lösungen der Copolymerisate A) einen Festkörpergehalt von 95 bis 60 Gew.-%, bevorzugt 92,5 bis 80 Gew.-% aufweisen.

Die Vorgehensweise zur Polymerisation der ungesättigten Monomere ist dem Fachmann an sich vertraut. Typischerweise wird dazu in einem Reaktionsgefäß ein geeignetes Lösungsmittel vorgelegt und die ungesättigten Monomere im Zulaufverfahren unter Einsatz eines Radikalinitiators polymerisiert.

Als geeignete organische Lösemittel kommen beliebige in der Lacktechnologie bekannte Lösemittel in Betracht, bevorzugt sind solche, die üblicherweise als Colöser in wässrigen Dispersionen eingesetzt werden, wie z.B. Alkohole, Ether, Ethergruppen-haltige Alkohole, Ester, Ketone oder unpolare Kohlenwasserstoffe z.B. aliphatische oder aromatische Kohlenwasserstoffen bzw. Gemische dieser Lösemittel.

Die Herstellung der Komponente A) in der Ausführungsform (α) oder (β) erfolgt durch eine zweistufige Zugabe und Polymerisation der Monomerengemische I) und II) in der genannten Reihenfolge. Dabei wird in einem ersten Schritt (i) aus den Monomeren Ia) und Ib) ein hydroxyfunktionelles, hydrophobes Polymerisat I) mit einer OH-Zahl von 12 bis 250 mg KOH/g Feststoff, bevorzugt von 50 bis 200 mg KOH/g Feststoff hergestellt. In einem anschließenden Schritt (ii) wird in der aus Schritt (i) erhaltenen Lösung des Polymerisats I) das hydroxyfunktionelle, hydrophile Polymerisat II) aus den Monomeren IIa) bis IIc) hergestellt, wobei dieses hydroxyfunktionelle, hydrophile Polymerisat II) eine OH-Zahl von 20 bis 250 mg KOH/g Feststoff, bevorzugt von 120 bis 220 mg KOH/g Feststoff und eine Säurezahl von 50 bis 250 mg KOH/g Feststoff, bevorzugt von 110 bis 200 mg KOH/g Feststoff aufweist. Silan-funktionelle Monomere IS1) werden entsprechend mit dem Monomerengemisch Ia) und Ib) oder IIS2) mit dem Monomerengemisch IIa), IIb) und IIc) copolymerisiert.

Die Herstellung der Komponente A) in der Ausführungsform (γ) erfolgt durch eine zweistufige Zugabe und Polymerisation der Monomerengemische I) und II) in der genannten Reihenfolge. Dabei wird in einem ersten Schritt (i) aus den Monomeren Ia) und Ib) ein hydroxyfunktionelles, hydrophobes Polymerisat I) mit einer OH-Zahl von 12 bis 250 mg KOH/g Feststoff, bevorzugt von 50 bis 200 mg KOH/g Feststoff hergestellt. In einem anschließenden Schritt (ii) wird in der aus Schritt (i) erhaltenen Lösung des Polymerisats I) das hydroxyfunktionelle, hydrophile Polymerisat II) aus den Monomeren IIa) bis IIc) und IIS2) hergestellt. In diesem Schritt erfolgt nach der radikalischen Polymerisation der Komponente IIa) bis IIc) simultan die Reaktion der Epoxidgruppen von IIS2) mit freien Carbonsäuregruppen. Diese Reaktion kann gegebenenfalls durch geeignete Veresterungskatalysatoren wie z.B. Dibutylzinndilaurat oder Zinndioctoat katalysiert werden. Das hydroxyfunktionelle, hydrophile Polymerisat II) weist eine OH-Zahl von 20 bis 250 mg KOH/g Feststoff, bevorzugt von 120 bis 220 mg KOH/g Feststoff und eine Säurezahl von 50 bis 250 mg KOH/g Feststoff, bevorzugt von 110 bis 200 mg KOH/g Feststoff auf.

Zur Neutralisation der im Copolymerisat A) einpolymerisierten Carboxylgruppen können organische Amine oder wasserlösliche, anorganische Basen eingesetzt werden. Bevorzugt sind N-Methylmorpholin, Triethylamin, Dimethylethanolamin, Dimethylisopropanolamin, Methyldiethanolamin, Triethanolamin oder Ethyl-diisopropylamin. Ebenfalls geeignet sind Diethylethanolamin, Butanolamin, Morpholin, 2-Aminomethyl-2-methyl-propanol oder Isophorondiamin.

Das Neutralisationsmittel wird in solchen Mengen zugesetzt, dass der Neutralisationsgrad 70 bis 130 %, bevorzugt 90 bis 105 % der Carboxylgruppen beträgt, wobei besonders bevorzugt eine solche Menge Neutralisationsmittel zugesetzt wird, dass nach Überführung aller Carboxylgruppen in die Salzform noch freies Neutralisationsmittel vorhanden ist. Dies entspricht einem Neutralisationsgrad von >100 %.

Die resultierenden, hydrophilen Polymerisate A) werden anschließend durch Zusatz von Wasser oder durch Überführung in Wasser dispergiert. Der pH-Wert der wässrigen Dispersion beträgt 6,0 bis 11,0, bevorzugt 7,5 bis 10,0, der Festkörpergehalt beträgt 35 bis 65 Gew.-%, bevorzugt 40 bis 55 Gew.-%.

Als Partikel B) kommen anorganische Oxide, Mischoxide, Hydroxide, Sulfate, Carbonate, Carbide, Boride und Nitride von Elementen der II bis IV Hauptgruppe und/oder Elemente der I bis VIII Nebengruppe des Periodensystems einschließlich der Lanthanide in Frage. Bevorzugte Partikel B) sind Siliziumoxid, Aluminiumoxid, Ceroxid, Zirkonoxid, Nioboxid und Titanoxid, besonders bevorzugt sind Siliziumoxid-Nanopartikel.

Die eingesetzten Partikel weisen bevorzugt mittlere Partikelgrößen mittels dynamischer Lichtstreuung in Dispersion bestimmt als Z-Mittelwert von 5 bis 100 nm, besonders bevorzugt 5 bis 50 nm auf.

Bevorzugt weisen wenigstens 75 %, besonders bevorzugt wenigstens 90 %, ganz besonders bevorzugt wenigstens 95 % aller eingesetzten Partikel die vorstehend definierten Größen, auf.

Während oder im Anschluss an die Herstellung des modifizierten Copolymerisats A) werden die gegebenenfalls oberflächenmodifizierten Nanopartikel B) eingebracht. Dies kann durch einfaches Einrühren der Partikel erfolgen. Denkbar ist jedoch auch der Einsatz erhöhter Dispergierenergie, wie beispielsweise durch Ultraschall, Strahldispergierung oder Hochgeschwindigkeitsrüher nach dem Rotor-Stator-Prinzip. Bevorzugt ist einfaches mechanisches Einrühren.

Die Partikel B) können prinzipiell sowohl in Pulverform als auch in Form von kolloiden Suspensionen oder Dispersionen in geeigneten Lösungsmitteln eingesetzt werden. Die anorganischen Nanopartikel B) werden bevorzugt in kolloid disperser Form in organischen Lösungsmitteln (Organosole) oder in Wasser eingesetzt.

Für die Organosole geeignete Lösemittel sind Methanol, Ethanol, i-Propanol, Aceton, 2-Butanon, Methyl-isobutylketon, Butylacetat, Ethylacetat, 1-Methoxy-2-propylacetat, Toluol, Xylol, 1,4-Dioxan, Diacetonalkohol, Ethylenglykol-n-propylether oder beliebige Gemische solcher Lösungsmittel. Geeignete Organosole weisen einen Feststoffgehalt von 10 bis 60 Gew.-%, bevorzugt 15 bis 50 Gew.-% auf. Geeignete Organosole sind beispielsweise Siliziumdioxid Organosole wie sie z.B. unter den Handelsnamen Organosilicasol® und Suncolloid® (Nissan Chem. Am. Corp.) oder unter der Bezeichnung Highlink®NanO G (Clariant GmbH) erhältlich sind.

Soweit die Nanopartikel in organischen Lösemitteln (Organosole) zum Einsatz kommen, werden diese mit den Copolymerisaten A) vor deren Dispergierung mit Wasser vermischt. Die resultierenden Mischungen werden anschließend durch Zusatz von Wasser oder durch Überführung in Wasser dispergiert. Die Mischung der Organosolen mit Copolymerisate A) kann sowohl vor als auch nach Neutralisation der in Copolymerisat A) einpolymerisierten Carboxylgruppen erfolgen. Das organische Lösemittel des Organosols kann nach Bedarf vor oder nach der Dispergierung mit Wasser, vorzugsweise im Anschluss an die Dispergierung, mit Wasser destillativ entfernt werden.

Im Sinne der vorliegenden Erfindung werden weiterhin bevorzugt anorganische Partikel B) in Form ihrer wässrigen Zubereitungen verwendet. Besonders bevorzugt ist der Einsatz anorganischer Partikel B) in Form wässriger Zubereitungen oberflächenmodifizierter, anorganischer Nanopartikel. Diese können beispielsweise vor oder gleichzeitig mit der Einarbeitung in das silanmodifizierte, polymere organische Bindemittel oder eine wässrige Dispersion des silanmodifizierten, polymeren organischen Bindemittels durch Silanisierung modifiziert werden. Diese Methode ist im Prinzip Literatur bekannt und beispielsweise in DE-A 19846660 oder WO 03/44099 beschrieben.

Weiterhin kann die Oberfläche der anorganischen Nanopartikel adsorptiv/assoziativ durch Tenside oder Blockcopolymere modifiziert werden, wie beispielsweise in WO 2006/008120 bzw. Foerster, S. & Antonietti, M., Advanced Materials, 10, no. 3, (1998) 195 modifiziert werden.

Bevorzugte Oberflächenmodifizierung ist die Silanisierung mit Alkoxysilanen und/oder Chlorsilanen. Besonders bevorzugt ist die partielle Modifizierung mit γ-Glycidoxypropyltrimethoxysilan entsprechend der der WO-A 2004/035474.

Bevorzugte wässrige, kommerzielle Nanopartikel-Dispersionen sind Levasile® (H.C. Starck GmbH, Goslar, Deutschland) und Bindzile® (EKA Chemical AB, Bohus, Schweden). Besonders bevorzugt werden wässrige Dispersionen von Bindzil® CC 30 und Bindzil® CC 40 der Fa. EKA (EKA Chemical AB, Bohus, Schweden) eingesetzt.

Soweit die Nanopartikel in wässriger Form zum Einsatz kommen, werden diese den wässrigen Dispersionen der Copolymerisate A) zugesetzt. In einer weiteren Ausführungsform werden die wässrigen Nanopartikel-Kolloide den Copolymerisaten A) nach der Neutralisation der in Copolymerisat A) einpolymerisierten Carboxylgruppen zugesetzt und gegebenenfalls anschließend mit Wasser weiter verdünnt.

Die erfindungsgemäßen wässrigen Zubereitungen können zu wässrigen Beschichtungsmitteln verarbeitet werden. Durch Kombination mit Vernetzern D) können dabei, je nach Reaktivität oder gegebenenfalls Blockierung der Vernetzer, sowohl Einkomponentenlacke als auch Zweikomponentenlacke hergestellt werden. Unter Einkomponentenlacken im Sinne der vorliegenden Erfindung sind dabei Überzugsmittel zu verstehen, bei denen Bindemittelkomponente und Vernetzerkomponente zusammen gelagert werden können, ohne dass eine Vernetzungsreaktion in merklichen bzw. für die spätere Applikation schädlichem Ausmaß stattfindet. Die Vernetzungsreaktion findet erst bei Applikation nach einer Aktivierung des Vernetzers statt. Diese Aktivierung kann z.B. durch Temperatursteigerung bewirkt werden. Unter Zweikomponentenlacken im Sinne der vorliegenden Erfindung versteht man Überzugsmittel, bei denen Bindemittelkomponente und Vernetzerkomponente aufgrund ihrer hohen Reaktivität in getrennten Gefäßen gelagert werden müssen. Die beiden Komponenten werden erst kurz vor Applikation gemischt und reagieren dann im Allgemeinen ohne zusätzliche Aktivierung. Zur Beschleunigung der Vernetzungsreaktion können aber auch Katalysatoren eingesetzt oder höhere Temperaturen angewendet werden.

Gegenstand der vorliegenden Erfindung sind daher auch wässrige Beschichtungsmittel enthaltend die erfindungsgemäßen wässrigen Zubereitungen sowie mindestens einen Vernetzer D).

Geeignete Vernetzer D) sind beispielsweise Polyisocyanat-Vernetzer, Amid- und Amin-Formaldehydharze, Phenolharze, Aldehyd- und Ketonharze, wie z.B. Phenol-Formaldehydharze, Resole, Furanharze, Harnstoffharze, Carbamidsäureesterharze, Triazinharze, Melaminharze, Benzoguanaminharze, Cyanamidharze, Anilinharze, wie sie in "Lackkunstharze", H. Wagner, H.F. Sarx, Carl Hanser Verlag München, 1971, beschrieben sind.

Bevorzugte Vernetzer D) sind freie oder blockierte Polyisocyanate, welche gegebenenfalls hydrophil modifiziert sein können und/oder zu mindestens teilweise hydrophil-modifizierte, unblockierte Polyisocyanate.

Gegenstand der vorliegenden Erfindung sind ebenfalls wässrige Zweikomponenten(2K)-Beschichtungsmittel enthaltend die erfindungsgemäßen wässrigen Zubereitungen sowie ein Polyisocyanat. Bevorzugt ist das Polyisocyanat mindestens anteilig hydrophil-modifiziert.

Geeignete Polyisocyanate sind difunktionellen Isocyanaten wie z.B. Isophorondiisocyanat, Hexamethylendiisocyanat, 2,4- bzw. 2,6-Diisocyanatotoluol, 4.4'-Diphenylmethandiisocyanat und/oder deren höhermolekularen Trimere, Biurete, Urethane, Iminooxadiazindion und/oder Allophanate. Besonders bevorzugt ist der Einsatz niedrigviskoser, gegebenenfalls hydrophilierter, Polyisocyanate der vorstehend genannten Art auf Basis aliphatischer oder cycloaliphatischer Isocyanate.

Zur Blockierung werden die zuvor genannten Polyisocyanate mit Blockierungsmittel wie z.B. Methanol, Ethanol, Butanol, Hexanol, Benzylakohol, Acetoxim, Butanonoxim, Caprolactam, Phenol, Dimethylmalonat, Dieethylmalonat, Dimethylpyrazol, Triazol, Dimethyltriazol, Acetessigester, Diisopropylamin, Dibutylamin, tert.-Butylbenzylamin, Cyclopentanoncarboxyethylester, Dicyclohexylamin und/oder tert.-Butylisopropylamin umgesetzt.

Die unblockierten und blockierten Polyisocyanate können auch durch Einbau hydrophiler Gruppen, wie z.B. Carboxylat-, Sulphonat- und/oder Polyethylenoxidstrukturen in eine wasserdispergierbare Form überführt werden und so in Kombination mit den erfindungsgemäßen Zubereitungen eingesetzt werden. Die genannten blockierten Polyisocyanate können auch unter Mitverwendung hydroxy- bzw. aminofunktioneller, auch höhermolekularere Komponenten, wie z.B. Diole, Triole, Aminoalkohole, Polyester, Polyether, Polycarbonate und Mischungen der genannten und/oder anderer Rohstoffe hergestellt werden.

Die als Vernetzer D) eingesetzten Polyisocyanate weisen bei 23°C im Allgemeinen eine Viskosität von 10 bis 5 000 mPas auf und können auch falls zur Viskositätseinstellung gewünscht in Abmischung mit geringen Mengen an inerten Lösemitteln zum Einsatz gelangen.

Prinzipiell ist natürlich auch der Einsatz von Mischungen verschiedener Vernetzer D) möglich.

Vor, während oder nach der Herstellung der erfindungsgemäßen wässrigen Zubereitungen können die üblichen Hilfs- und Zusatzmittel der Lacktechnologie zugesetzt werden, wie z.B. Entschäumungsmittel, Verdickungsmittel, Pigmente, Dispergierhilfsmittel, Katalysatoren, Hautverhinderungsmittel, Antiabsetzmittel oder Emulgatoren.

Die wässrigen Beschichtungsmittel, enthaltend die erfindungsgemäßen Zubereitungen, eignen sich für alle Einsatzgebiete in denen wässrige Anstrich- und Beschichtungssysteme mit hohen Anforderungen an die Beständigkeit der Filme Verwendung finden, z.B. für die Beschichtung mineralischer Baustoff-Oberflächen, Lackierung und Versiegelung von Holz und Holzwerkstoffen, Beschichtung metallischer Oberflächen (Metallbeschichtung), Beschichtung und Lackierung asphalt- oder bitumenhaltiger Beläge, Lackierung und Versiegelung diverser Kunststoffoberflächen (Kunststoffbeschichtung) sowie Hochglanzlacke.

Die wässrigen Beschichtungsmittel, enthaltend die erfindungsgemäßen Zubereitungen, werden zur Herstellung von Grundierungen, Füller, pigmentierter oder transparenter Decklacke, Klarlacke und Hochglanzlacke sowie Einschichtlacke, die in der Einzel- und Serienapplikation, z.B. im Bereich der Industrielackierung, Automobil-Erst- und -Reparaturlackierung Anwendung finden können, eingesetzt.

Die Aushärtung der wässrigen Beschichtungsmittel, enthaltend die erfindungsgemäßen Zubereitungen, erfolgt dabei typischerweise bei Temperaturen von 0 bis 60°C, bevorzugt von 18 bis 130°C.

Diese Beschichtungen weisen bei sehr guter Filmoptik ein hohes Niveau in Kratzbeständigkeit, Lösemittel- und Chemikalienbeständigkeit, gute Wetterbeständigkeit, hohe Härte und schnelle Trocknung auf.

Die Herstellung der Beschichtungen kann nach den unterschiedlichen Spritzverfahren wie beispielsweise pneumatisch, airless oder Elektrostatik-Spritzverfahren unter Verwendung von Ein- oder gegebenenfalls Zweikomponenten-Spritzanlagen erfolgen. Die Lacke und Beschichtungsmittel, enthaltend die erfindungsgemäßen wässrigen Beschichtungsmittel, können jedoch auch nach anderen Methoden, beispielsweise durch Streichen, Rollen oder Rakeln appliziert werden.

### Beispiele

Soweit nicht abweichend vermerkt, sind die Prozentangaben als Gewichtsprozent zu verstehen.

Die Bestimmung der Hydroxylzahl (OH-Zahl) erfolgte gemäß DIN 53240-2.

Die Viskositätsbestimmung erfolgte mittels Rotationsviskosimeter Paar Physica MC R51 gemäß DIN EN ISO 3219.

Die Bestimmung der Säurezahl erfolgte gemäß DIN EN ISO 2114.

### Bestimmung der Teilchengröße

Die Teilchengrößen wurden mittels Dynamischer Lichtstreuuung mit einem HPPS particle size analyzer (Fa. Malvern, Worcestershire, UK) bestimmt. Die Auswertung erfolgte über die Dispersion Technology Software 4,10. Um Mehrfachstreuung zu vermeiden wurde eine hochverdünnte Dispersion der Nanopartikel hergestellt. Ein Tropfen einer verdünnten Nanopartikeldispersion (ca. 0,1 - 10 %) wurde in eine Küvette enthaltend ca. 2 ml des gleichen Lösemittels wie die Dispersion gegeben, geschüttelt und im HPPS analyzer bei 20 bis 25 °C vermessen. Wie dem Fachmann allgemein bekannt, wurden vorher die relevanten Parameter des Dispergiermediums - Temperatur, Viskosität und Brechungsindex - in die Software eingegeben. Im Falle organischer Lösemittel wurde eine Glasküvette eingesetzt. Als Resultat wurde eine Intensitäts- bzw. Volumen- Teilchendurchmesser-Kurve sowie der Z-Mittelwert für den Teilchendurchmesser erhalten. Es wurde darauf geachtet, dass der Polydispersitätsindex < 0,5 war
- Bayhydur® XP 2655:: hydrophiles, aliphatisches Polyisocyanat auf Basis Hexamethylendiisocyanat, Isocyanatgehalt: 21,2 ± 0,5% (Bayer MaterialScience AG/Leverkusen, Deutschland)
- Bindzil® CC40:: 40%ig kolloid-disperses, oberflächenmodifiziertes Siliziumdioxid in Wasser, mittlere Teilchengröße 12 nm entsprechend Herstellerangaben (EKA Chemical AB, Bohus, Schweden); Mittels Dynamischer Lichtstreuung wurde eine Teilchengröße im Z-Mittel von ca. 29 nm erhalten
- Byk® 325:: Verlaufhilfsmittel (Byk-Chemie GmbH, Wesel, Deutschland)
- Byk® 345:: Benetzungsadditiv (Byk-Chemie GmbH, Wesel, Deutschland)
- CoatOSil® 1706:: Vinyl-tris-i-propoxysilan (Momentive/Leverkusen, Deutschland)
- Desmodur® XP 2410:: aliphatisches Polyisocyanate, Isocyanatgehalt: 23,5 ± 0,5% (Bayer MaterialScience AG/Leverkusen, Deutschland)
- Dowanol® PnB:: Lösemittel (Dow Chem. Comp., Horgen, Schweiz)
- Organosilicasol® MEK-ST:: 36 Gew.-%ig kolloid-disperses Siliziumdioxid in 2-Butanon, mittlere Teilchengröße 10 - 15 nm entsprechend Herstellerangaben (Nissan Chem. Am. Corp., Houston/TX, USA); Mittels Dynamischer Lichtstreuung wurde eine Teilchengröße im Z-Mittel von ca. 15 - 40 nm erhalten
- Rhodiasolv® RPDE:: Lösemittel (Rhodia Syntech GmbH, Frankfurt a. M., Deutschland)

### Vergleichsbeispiel 1

In einem 5 1-Reaktionsgefäß mit Rühr-, Kühl- und Heizvorrichtung wurden 220 g Dowanol® PnB vorgelegt und auf 138°C aufgeheizt. Bei dieser Temperatur wurde innerhalb 30 Minuten eine Mischung 1) aus 4 g Di-tert.-butylperoxid in 4 g Dowanol® PnB zugetropft. Unmittelbar anschließend wurde eine Mischung 2) aus 298,3 g i-Bornylmethacrylat, 292,0 g Hydroxyethylacrylat, 169,8 g Butylmethacrylat, 139 g Styrol und 90,4 g 2-Ethylhexylacrylat in 3,5 Stunden und unmittelbar anschließend eine Mischung 3) aus 63,8 g Styrol, 90 g Hydroxyethylacrylat, 50 g Butylacrylat und 28,7 g Methacrylsäure in 1,5 Stunden zudosiert. Parallel zu Mischung 2) und 3) wurde innerhalb von 5 Stunden eine Mischung 4) aus 14,5 g Di-tert.-butylperoxid in 14,5 g Dowanol® PnB zudosiert. Anschließend wurde innerhalb von 1 Stunde eine Mischung 5) aus 4 g Di-tert.-butylperoxid in 4 g Dowanol® PnB zudosiert. Anschließend wurde auf 100°C abgekühlt und 31,2 g N,N-Dimethyethanolamin zugegeben. Nach 30 Minuten Homogenisieren wurde innerhalb von 2 Stunden bei 80°C mit 1595 g Wasser dispergiert. Es wurde eine Copolymerisat-Dispersion mit folgenden Daten erhalten:

| | |
|---|---|
| OH-Gehalt (berechnet auf Festkörper) | 4,5 % |
| Säurezahl (Festkörper) | 15,5 mg KOH/g |
| Festkörpergehalt | 40,1 % |
| Viskosität | 580 mPas_{23°C} |
| pH-Wert (10 %ig in Wasser) | 8,4 |
| Neutralisationsgrad | 105 % |
| Mittlere Teilchengröße | 105 nm |
| Cosolvens: | 7,8 Gew.-% |

### Vergleichsbeispiel 2

In einem 5 1-Reaktionsgefäß mit Rühr-, Kühl- und Heizvorrichtung wurden 220 g Dowanol® PnB vorgelegt und auf 138°C aufgeheizt. Bei dieser Temperatur wurde innerhalb 30 Minuten eine Mischung 1) aus 4 g Di-tert.-butylperoxid in 4 g Dowanol® PnB zugetropft. Unmittelbar anschließend wurde eine Mischung 2) aus 298,3 g i-Bornylmethacrylat, 292,0 g Hydroxyethylacrylat, 169,8 g Butylmethacrylat, 139 g Styrol und 90,4 g 2-Ethylhexylacrylat in 3,5 Stunden und unmittelbar anschließend eine Mischung 3) aus 63,8 g Styrol, 90 g Hydroxyethylacrylat, 50 g Butylacrylat und 28,7 g Methacrylsäure in 1,5 Stunden zudosiert. Parallel zu Mischung 2) und 3) wurde innerhalb von 5 Stunden eine Mischung 4) aus 14,5 g Di-tert.-butylperoxid in 14,5 g Dowanol® PnB zudosiert. Anschließend wurde innerhalb von 1 Stunde eine Mischung 5) aus 4 g Di-tert.-butylperoxid in 4 g Dowanol® PnB zudosiert. Anschließend wurde auf 70°C abgekühlt. In diese Schmelze wurden 218 g einer 36 Gew-%igen kolloidalen Dispersion von Siliziumdioxids in Methylethylketon (Organosilicasol® MEK-ST, Nissan Chem. Am. Corp.) eingetragen. Anschließend wurden 31,2 g N,N-Dimethyethanolamin zugegeben, 30 Minuten homogenisiert wurde innerhalb von 2 Stunden bei ca. 60°C mit 1690 g Wasser dispergiert. Anschließend wurde das Methylethylketon im Vakuum abdestilliert. Es wurde eine Copolymerisat-Dispersion mit folgenden Daten erhalten:

| | |
|---|---|
| OH-Gehalt (berechnet auf Festkörper) | 4,2 % |
| Säurezahl (Festkörper) | 14,5 mg KOH/g |
| Festkörpergehalt | 40,7 % |
| Viskosität | 430 mPas_{23°C} |
| pH-Wert (10 %ig in Wasser) | 8,2 |
| Neutralisationsgrad | 105 % |
| Mittlere Teilchengröße | 96 nm |
| Cosolvens: | 7,4 Gew.-% |

### Vergleichsbeispiel 3

In einem 5 1-Reaktionsgefäß mit Rühr-, Kühl- und Heizvorrichtung wurden 220 g Dowanol® PnB vorgelegt und auf 138°C aufgeheizt. Bei dieser Temperatur wurde innerhalb 30 Minuten eine Mischung 1) aus 4 g Di-tert.-butylperoxid in 4 g Dowanol® PnB zugetropft. Unmittelbar anschließend wurde eine Mischung 2) aus 298,3 g i-Bornylmethacrylat, 292,0 g Hydroxyethylacrylat, 169,8 g Butylmethacrylat, 139 g Styrol und 90,4 g 2-Ethylhexylacrylat in 3,5 Stunden und unmittelbar anschließend eine Mischung 3) aus 63,8 g Styrol, 90 g Hydroxyethylacrylat, 50 g Butylacrylat und 28,7 g Methacrylsäure in 1,5 Stunden zudosiert. Parallel zu Mischung 2) und 3) wurde innerhalb von 5 Stunden eine Mischung 4) aus 14,5 g Di-tert.-butylperoxid in 14,5 g Dowanol® PnB zudosiert. Anschließend wurde innerhalb von 1 Stunde eine Mischung 5) aus 4 g Di-tert.-butylperoxid in 4 g Dowanol® PnB zudosiert. Anschließend wurde auf 70°C abgekühlt. In diese Schmelze wurden 436 g einer 36 Gew-%igen kolloidalen Dispersion von Siliziumdioxids in Methylethylketon (Organosilicasol® MEK-ST, Nissan Chem. Am. Corp.) eingetragen. Anschließend wurden 31,2 g N,N-Dimethyethanolamin zugegeben, 30 Minuten homogenisiert wurde innerhalb von 2 Stunden bei ca. 60°C mit 1790 g Wasser dispergiert. Anschließend wurde das Methylethylketon im Vakuum abdestilliert. Es wurde eine Copolymerisat-Dispersion mit folgenden Daten erhalten:

| | |
|---|---|
| OH-Gehalt (berechnet auf Festkörper) | 4,0 % |
| Säurezahl (Festkörper) | 13,5 mg KOH/g |
| Festkörpergehalt | 40,3 % |
| Viskosität | 440 mPas_{23°C} |
| pH-Wert (10 %ig in Wasser) | 8,4 |
| Neutralisationsgrad | 105 % |
| Mittlere Teilchengröße | 135 nm |
| Cosolvens: | 7,0 Gew.-% |

### Vergleichsbeispiel 4

In einem 5 1-Reaktionsgefäß mit Rühr-, Kühl- und Heizvorrichtung wurden 220 g Dowanol® PnB vorgelegt und auf 138°C aufgeheizt. Bei dieser Temperatur wurde innerhalb 30 Minuten eine Mischung 1) aus 4 g Di-tert.-butylperoxid in 4 g Dowanol® PnB zugetropft. Unmittelbar anschließend wurde eine Mischung 2) aus 298,3 g i-Bornylmethacrylat, 292,0 g Hydroxyethylacrylat, 169,8 g Butylmethacrylat, 139 g Styrol und 90,4 g 2-Ethylhexylacrylat in 3,5 Stunden und unmittelbar anschließend eine Mischung 3) aus 63,8 g Styrol, 90 g Hydroxyethylacrylat, 50 g Butylacrylat und 28,7 g Methacrylsäure in 1,5 Stunden zudosiert. Parallel zu Mischung 2) und 3) wurde innerhalb von 5 Stunden eine Mischung 4) aus 14,5 g Di-tert.-butylperoxid in 14,5 g Dowanol® PnB zudosiert. Anschließend wurde innerhalb von 1 Stunde eine Mischung 5) aus 4 g Di-tert.-butylperoxid in 4 g Dowanol® PnB zudosiert. Anschließend wurde auf 70°C abgekühlt. In diese Schmelze wurden 680 g einer 36 Gew-%igen kolloidalen Dispersion von Siliziumdioxids in Methylethylketon (Organosilicasol® MEK-ST, Nissan Chem. Am. Corp.) eingetragen. Anschließend wurden 31,2 g N,N-Dimethyethanolamin zugegeben, 30 Minuten homogenisiert und innerhalb von 2 Stunden bei ca. 60°C mit 1595 g Wasser dispergiert. Anschließend wurde das Methylethylketon im Vakuum abdestilliert. Es wurde eine Copolymerisat-Dispersion mit folgenden Daten erhalten:

| | |
|---|---|
| OH-Gehalt (berechnet auf Festkörper) | 3,8 % |
| Säurezahl (Festkörper) | 12,7 mg KOH/g |
| Festkörpergehalt | 44,3 % |
| Viskosität | 840 mPas_{23°C} |
| pH-Wert (10 %ig in Wasser) | 8,6 |
| Neutralisationsgrad | 105 % |
| Mittlere Teilchengröße | 153 nm |
| Cosolvens: | 7,2 Gew.-% |

### Vergleichsbeispiel 5

In einem 5 1-Reaktionsgefäß mit Rühr-, Kühl- und Heizvorrichtung wurden 220 g Dowanol® PnB vorgelegt und auf 138°C aufgeheizt. Bei dieser Temperatur wurde innerhalb 30 Minuten eine Mischung 1) aus 4 g Di-tert.-butylperoxid in 4 g Dowanol® PnB zugetropft. Unmittelbar anschließend wurde eine Mischung 2) aus 298,3 g i-Bornylmethacrylat, 292,0 g Hydroxyethylacrylat, 169,8 g Butylmethacrylat, 126,5 g Styrol, 90,4 g 2-Ethylhexylacrylat und 12,5 g CoatOSil® 1706 in 3,5 Stunden und unmittelbar anschließend eine Mischung 3) aus 63,8 g Styrol, 90 g Hydroxyethylacrylat, 50 g Butylacrylat und 28,7 g Methacrylsäure in 1,5 Stunden zudosiert. Parallel zu Mischung 2) und 3) wurde innerhalb von 5 Stunden eine Mischung 4) aus 14,5 g Di-tert.-butylperoxid in 14,5 g Dowanol® PnB zudosiert. Anschließend wurde innerhalb von 1 Stunde eine Mischung 5) aus 4 g Di-tert.-butylperoxid in 4 g Dowanol® PnB zudosiert. Anschließend wurde auf 100°C abgekühlt und 31,2 g N,N-Dimethyethanolamin zugegeben. Nach 30 Minuten Homogenisieren wurde innerhalb von 2 Stunden bei 80°C mit 1595 g Wasser dispergiert. Es wurde eine Copolymerisat-Dispersion mit folgenden Daten erhalten:

| | |
|---|---|
| OH-Gehalt (berechnet auf Festkörper) | 4,5 % |
| Säurezahl (Festkörper) | 15,5 mg KOH/g |
| Festkörpergehalt | 40,2 % |
| Viskosität | 500 mPas_{23°C} |
| pH-Wert (10 %ig in Wasser) | 8,4 |
| Neutralisationsgrad | 105 % |
| Mittlere Teilchengröße | 100 nm |
| Cosolvens: | 7,8 Gew.-% |

### Beispiel 6

In einem 5 1-Reaktionsgefäß mit Rühr-, Kühl- und Heizvorrichtung wurden 220 g Dowanol® PnB vorgelegt und auf 138°C aufgeheizt. Bei dieser Temperatur wurde innerhalb 30 Minuten eine Mischung 1) aus 4 g Di-tert.-butylperoxid in 4 g Dowanol® PnB zugetropft. Unmittelbar anschließend wurde eine Mischung 2) aus 298,3 g i-Bornylmethacrylat, 292,0 g Hydroxyethylacrylat, 169,8 g Butylmethacrylat, 126,5 g Styrol, 90,4 g 2-Ethylhexylacrylat und 12,5 g CoatOSil® 1706 in 3,5 Stunden und unmittelbar anschließend eine Mischung 3) aus 63,8 g Styrol, 90 g Hydroxyethylacrylat, 50 g Butylacrylat und 28,7 g Methacrylsäure in 1,5 Stunden zudosiert. Parallel zu Mischung 2) und 3) wurde innerhalb von 5 Stunden eine Mischung 4) aus 14,5 g Di-tert.-butylperoxid in 14,5 g Dowanol® PnB zudosiert. Anschließend wurde innerhalb von 1 Stunde eine Mischung 5) aus 4 g Di-tert.-butylperoxid in 4 g Dowanol® PnB zudosiert. Anschließend wurde auf 70°C abgekühlt. In diese Schmelze wurden 436 g einer 36 Gew-%igen kolloidalen Dispersion von Siliziumdioxids in Methylethylketon (Organosilicasol® MEK-ST, Nissan Chem. Am. Corp.) eingetragen. Anschließend wurden 31,2 g N,N-Dimethyethanolamin zugegeben, 30 Minuten homogenisiert und innerhalb von 2 Stunden bei ca. 60°C mit 1790 g Wasser dispergiert. Anschließend wurde das Methylethylketon im Vakuum abdestilliert. Es wurde eine Copolymerisat-Dispersion mit folgenden Daten erhalten:

| | |
|---|---|
| OH-Gehalt (berechnet auf Festkörper) | 4,0 % |
| Säurezahl (Festkörper) | 13,5 mg KOH/g |
| Festkörpergehalt | 40,3 % |
| Viskosität | 370 mPas_{23°C} |
| pH-Wert (10 %ig in Wasser) | 8,4 |
| Neutralisationsgrad | 105 % |
| Mittlere Teilchengröße | 125 nm |
| Cosolvens: | 7,0 Gew.-% |

### Beispiel 7

In einem 5 1-Reaktionsgefäß mit Rühr-, Kühl- und Heizvorrichtung wurden 220 g Dowanol® PnB vorgelegt und auf 138°C aufgeheizt. Bei dieser Temperatur wurde innerhalb 30 Minuten eine Mischung 1) aus 4 g Di-tert.-butylperoxid in 4 g Dowanol® PnB zugetropft. Unmittelbar anschließend wurde eine Mischung 2) aus 298,3 g i-Bornylmethacrylat, 292,0 g Hydroxyethylacrylat, 169,8 g Butylmethacrylat, 126,5 g Styrol, 90,4 g 2-Ethylhexylacrylat und 12,5 g CoatOSil® 1706 in 3,5 Stunden und unmittelbar anschließend eine Mischung 3) aus 63,8 g Styrol, 90 g Hydroxyethylacrylat, 50 g Butylacrylat und 28,7 g Methacrylsäure in 1,5 Stunden zudosiert. Parallel zu Mischung 2) und 3) wurde innerhalb von 5 Stunden eine Mischung 4) aus 14,5 g Di-tert.-butylperoxid in 14,5 g Dowanol® PnB zudosiert. Anschließend wurde innerhalb von 1 Stunde eine Mischung 5) aus 4 g Di-tert.-butylperoxid in 4 g Dowanol® PnB zudosiert. Anschließend wurde auf 70°C abgekühlt. In diese Schmelze wurden 680 g einer 36 Gew-%igen kolloidalen Dispersion von Siliziumdioxids in Methylethylketon (Organosilicasol® MEK-ST, Nissan Chem. Am. Corp.) eingetragen. Anschließend wurden 31,2 g N,N-Dimethyethanolamin zugegeben, 30 Minuten homogenisiert und innerhalb von 2 Stunden bei ca. 60°C mit 1595 g Wasser dispergiert. Anschließend wurde das Methylethylketon im Vakuum abdestilliert. Es wurde eine Copolymerisat-Dispersion mit folgenden Daten erhalten:

| | |
|---|---|
| OH-Gehalt (berechnet auf Festkörper) | 3,7 % |
| Säurezahl (Festkörper) | 12,5 mg KOH/g |
| Festkörpergehalt | 44,5 % |
| Viskosität | 560 mPas_{23°C} |
| pH-Wert (10 %ig in Wasser) | 8,4 |
| Neutralisationsgrad | 105 % |
| Mittlere Teilchengröße | 150 nm |
| Cosolvens: | 7,2 Gew.-% |

### Beispiel 8

In einem 5 1-Reaktionsgefäß mit Rühr-, Kühl- und Heizvorrichtung wurden 220 g Dowanol® PnB vorgelegt und auf 138°C aufgeheizt. Bei dieser Temperatur wurde innerhalb 30 Minuten eine Mischung 1) aus 4 g Di-tert.-butylperoxid in 4 g Dowanol® PnB zugetropft. Unmittelbar anschließend wurde eine Mischung 2) aus 298,3 g i-Bornylmethacrylat, 292,0 g Hydroxyethylacrylat, 169,8 g Butylmethacrylat, 126,5 g Styrol, 90,4 g 2-Ethylhexylacrylat und 12,5 g CoatOSil® 1706 in 3,5 Stunden und unmittelbar anschließend eine Mischung 3) aus 63,8 g Styrol, 90 g Hydroxyethylacrylat, 50 g Butylacrylat und 28,7 g Methacrylsäure in 1,5 Stunden zudosiert. Parallel zu Mischung 2) und 3) wurde innerhalb von 5 Stunden eine Mischung 4) aus 14,5 g Di-tert.-butylperoxid in 14,5 g Dowanol® PnB zudosiert. Anschließend wurde innerhalb von 1 Stunde eine Mischung 5) aus 4 g Di-tert.-butylperoxid in 4 g Dowanol® PnB zudosiert. Anschließend wurde auf 70°C abgekühlt. In diese Schmelze wurden 872 g einer 36 Gew-%igen kolloidalen Dispersion von Siliziumdioxids in Methylethylketon (Organosilicasol® MEK-ST, Nissan Chem. Am. Corp.) eingetragen. Anschließend wurden 31,2 g N,N-Dimethyethanolamin zugegeben, 30 Minuten homogenisiert und innerhalb von 2 Stunden bei ca. 60°C mit 1985 g Wasser dispergiert. Anschließend wurde das Methylethylketon im Vakuum abdestilliert. Es wurde eine Copolymerisat-Dispersion mit folgenden Daten erhalten:

| | |
|---|---|
| OH-Gehalt (berechnet auf Festkörper) | 3,6 % |
| Säurezahl (Festkörper) | 12,5 mg KOH/g |
| Festkörpergehalt | 41,5 % |
| Viskosität | 560 mPas_{23°C} |
| pH-Wert (10 %ig in Wasser) | 8,4 |
| Neutralisationsgrad | 105 % |
| Mittlere Teilchengröße | 150 nm |
| Cosolvens: | 6,3 Gew.-% |

### Beispiel 9

In einem 5 1-Reaktionsgefäß mit Rühr-, Kühl- und Heizvorrichtung wurden 220 g Dowanol® PnB vorgelegt und auf 138°C aufgeheizt. Bei dieser Temperatur wurde innerhalb 30 Minuten eine Mischung 1) aus 4 g Di-tert.-butylperoxid in 4 g Dowanol® PnB zugetropft. Unmittelbar anschließend wurde eine Mischung 2) aus 298,3 g i-Bornylmethacrylat, 292,0 g Hydroxyethylacrylat, 169,8 g Butylmethacrylat, 76,5 g Styrol, 90,4 g 2-Ethylhexylacrylat und 62,5 g CoatOSil® 1706 in 3,5 Stunden und unmittelbar anschließend eine Mischung 3) aus 63,8 g Styrol, 90 g Hydroxyethylacrylat, 50 g Butylacrylat und 28,7 g Methacrylsäure in 1,5 Stunden zudosiert. Parallel zu Mischung 2) und 3) wurde innerhalb von 5 Stunden eine Mischung 4) aus 14,5 g Di-tert.-butylperoxid in 14,5 g Dowanol® PnB zudosiert. Anschließend wurde innerhalb von 1 Stunde eine Mischung 5) aus 4 g Di-tert.-butylperoxid in 4 g Dowanol® PnB zudosiert. Anschließend wurde auf 70°C abgekühlt. In diese Schmelze wurden 1308 g einer 36 Gew-%igen kolloidalen Dispersion von Siliziumdioxids in Methylethylketon (Organosilicasol® MEK-ST, Nissan Chem. Am. Corp.) eingetragen. Anschließend wurden 31,2 g N,N-Dimethyethanolamin zugegeben, 30 Minuten homogenisiert und innerhalb von 2 Stunden bei ca. 60°C mit 2180 g Wasser dispergiert. Anschließend wurde das Methylethylketon im Vakuum abdestilliert. Es wurde eine Copolymerisat-Dispersion mit folgenden Daten erhalten:

| | |
|---|---|
| OH-Gehalt (berechnet auf Festkörper) | 3,2 % |
| Säurezahl (Festkörper) | 11,5 mg KOH/g |
| Festkörpergehalt | 41,5 % |
| Viskosität | 430 mPas_{23°C} |
| pH-Wert (10 %ig in Wasser) | 8,4 |
| Neutralisationsgrad | 105 % |
| Mittlere Teilchengröße | 155 nm |
| Cosolvens: | 5,8 Gew.-% |

### Beispiel 10 (15 Gew.-% SiO₂-Nanopartikel, wässriges SiO₂-Sol)

In einem 5 1-Reaktionsgefäß mit Rühr-, Kühl- und Heizvorrichtung wurden 4000 g wässrige Dispersion gemäß Vergleichsbeispiel 5 mit 705 g Bindzil® CC40 gemischt. Es resultierte eine homogene, wässrige Dispersion.

| | |
|---|---|
| OH-Gehalt (berechnet auf Festkörper) | 3,6 % |
| Säurezahl (Festkörper) | 12,5 mg KOH/g |
| Festkörpergehalt | 40,2 % |
| Viskosität | 430 mPas_{23°C} |
| pH-Wert (10 %ig in Wasser) | 8,4 |
| Neutralisationsgrad | 105 % |
| Mittlere Teilchengröße | 155 nm |
| Cosolvens: | 6,3 Gew.-% |

### Beispiel 11 (Vernetzer)

In einem 5 1-Reaktionsgefäß mit Rühr-, Kühl- und Heizvorrichtung wurden 750 g Rhodiasolv® RPDE vorgelegt. Es wurden 2975 g Desmodur® XP 2410 und 1275 g Bayhydur® XP 2655 zugegeben und homogen vermischt.

Der resultierende Vernetzer hatte einen Isocyanatgehalt von 19,3 %.

### Anwendungsbeispiele 12

Die Einzelkomponente der Komponente A wund B wurde in den angegebenen Mengenverhältnissen vermischt.

Die Applikation des vermischten 2K-Wasserklarlackes erfolgte mittels einer handelsüblichen Spritzpistole auf ein Aluminiumblech, das mit einer wässrigen Füllerschicht und einer wässrigen schwarzen, für Autoerstlackierung üblichen Basislackschicht vorbeschichtet war.

Nach der Applikation wurden die Bleche 5 Minuten bei Raumtemperatur und 10 Minuten bei 80°C abgelüftet, danach 30 Minuten bei 130°C getrocknet. Die Trockenschichtdicke des Klarlackes betrug ca. 40 µm.

| **Beispiel 12** | | **A** | **B** | **C** | **D** | **E** | **F** | **G** | **H** | **I** | **K** |
|---|---|---|---|---|---|---|---|---|---|---|---|
| **Komponente A** | | | | | | | | | | | |
| Beispiel 1 | Gew.-Tle | 500 | | | | | | | | | |
| Beispiel 2 | Gew.-Tle | | 500 | | | | | | | | |
| Beispiel 3 | Gew.-Tle | | | 500 | | | | | | | |
| Beispiel 4 | Gew.-Tle | | | | 500 | | | | | | |
| Beispiel 5 | Gew.-Tle | | | | | 500 | | | | | |
| Beispiel 6 | Gew.-Tle | | | | | | 500 | | | | |
| Beispiel 7 | Gew.-Tle | | | | | | | 500 | | | |
| Beispiel 8 | Gew.-Tle | | | | | | | | 500 | | |
| Beispiel 9 | Gew.-Tle | | | | | | | | | 500 | |
| Beispiel 10 | | | | | | | | | | | 500 |
| Byk® 345 | Gew.-Tle | 4 | 4 | 4 | 4 | 4 | 4 | 4 | 4 | 4 | 4 |
| Byk® 325 | Gew.-Tle | 1,25 | 1,25 | 1,25 | 1,25 | 1,25 | 1,25 | 1,25 | 1,25 | 1,25 | 1,25 |
| Wasser | Gew.-Tle | 74,5 | 61,8 | 50,5 | 89,2 | 75,1 | 50,9 | 89,7 | 34,1 | 21,7 | 27,2 |

| **Komponente B** | | | | | | | | | | | |
|---|---|---|---|---|---|---|---|---|---|---|---|
| Beispiel 11 | Gew.-Tle | 149,1 | 132,7 | 118,8 | 115,4 | 149,1 | 118,7 | 115,3 | 96,9 | 80,7 | 98,9 |
| | | | | | | | | | | | |
| **Ergebnisse** | | **A** | **B** | **C** | **D** | **E** | **F** | **G** | **H** | **I** | **K** |
| **Anteil Nano-SiO₂ bezogen auf FK** | Gew.-% | 0,0 | 3,6 | 6,9 | 10,5 | 0,0 | 6,9 | 10,5 | 13,6 | 19,7 | 10,0 |
| **Glanz/Glanzschleier** | | 90 / 10 | 90 / 15 | 88/35 | 83 / 113 | 91/9 | 90 / 11 | 91 / 10 | 90 / 15 | 90 / 18 | 90 / 17 |
| **Visuelle Beurteilung Glanzschleier** | | Klar | Leichter Schleier | deutlicher Schleier | Starker Schleier | Klar | Klar | Klar | Klar | Klar | Leichter Schleier |
| **Trockenkratzfestigkeit, 10 Doppelhübe** Restglanz | [rel.-%] | 18 | 19 | 21 | 20 | 19 | 30 | 43 | 59 | 55 | 91 |

### Glanz und Glanzschleier (Haze)

Die Glanzmessung erfolgte nach DIN EN ISO 2813. Je höher der Glanzmesswert ist, desto besser ist der Glanz. Die Messung des Glanzschleiers (Haze) erfolgte gemäß DIN EN ISO 13803. Je niedriger der Haze-Wert, desto klarer der Lack.

### Kratzfestigkeit

Die Kratzfestigkeitsprüfung der hergestellten Klarlacke erfolgte gemäß DIN 55668.

Der relative Restglanz in rel.-% gibt wider, wie hoch der Glanzgrad [20°] nach Verkratzung gemäß DIN 5668 im Vergleich zum Glanzgrad vor Verkratzung liegt. Je höher dieser Wert ist, desto besser ist die Kratzfestigkeit.

Wie die Beispiele 12 A bis K klar zeigen, zeichnen sich die erfindungsgemäßen Zubereitungen 12 F bis K durch verbesserte Kratzbeständigkeit bei Erhalt der guten optischen Eigenschaften insbesondere niedrigem Glanzschleier (Haze) aus.

## Patentansprüche

1. Wässrige Zubereitungen enthaltend
A) ein Silan-modifiziertes Copolymerisat,
B) anorganische Partikel, welche gegebenenfalls oberflächenmodifiziert sind, mit einer mittels dynamischer Lichtstreuung in Dispersion bestimmten mittleren Partikelgröße (z-Mittelwert) von kleiner als 200 nm sowie
C) Wasser;
**dadurch gekennzeichnet, dass** Komponente A) ein Copolymerisat ist, das aufgebaut ist aus
I) einem hydroxyfunktionellen, hydrophoben Polymerisat, enthaltend als Aufbaumonomere
Ia) (Meth)-acrylsäureester mit C₁- bis C₁₈-Kohlenwasserstoffresten im Alkoholteil und/oder Vinylaromaten und/oder Vinylester,
Ib) hydroxyfunktionelle Monomere und
IS1) Silan-funktionelle, zur Polymerisation befähigte Monomere sowie
II) einem hydroxyfunktionellen, hydrophilen Polymerisat, enthaltend als Aufbaukomponenten
IIa) (Meth)-acrylsäureester mit C₁- bis C₁₈-Kohlenwasserstoffresten im Alkoholteil und/oder Vinylaromaten und/oder Vinylester,
IIb) hydroxyfunktionelle Monomere und
IIc) säurefunktionelle Monomere.

2. Wässrige Zubereitungen enthaltend
A) ein Silan-modifiziertes Copolymerisat,
B) anorganische Partikel, welche gegebenenfalls oberflächenmodifiziert sind, mit einer mittels dynamischer Lichtstreuung in Dispersion bestimmten mittleren Partikelgröße (z-Mittelwert) von kleiner als 200 nm sowie
C) Wasser,
**dadurch gekennzeichnet, dass** Komponente A) ein Copolymerisat ist, das aufgebaut ist aus
I) einem hydroxyfunktionellen, hydrophoben Polymerisat, enthaltend als Aufbaumonomere
Ia) (Meth)-acrylsäureester mit C₁- bis C₁₈-Kohlenwasserstoffresten im Alkoholteil und/oder Vinylaromaten und/oder Vinylester,
Ib) hydroxyfunktionelle Monomere sowie
II) einem hydroxyfunktionellen, hydrophilen Polymerisat, enthaltend als Aufbaukomponenten
IIa) (Meth)-acrylsäureester mit C₁- bis C₁₈-Kohlenwasserstoffresten im Alkoholteil und/oder Vinylaromaten und/oder Vinylester,
IIb) hydroxyfunktionelle Monomere,
IIc) säurefunktionelle Monomere und
IIS1) Silan-funktionelle, zur Polymerisation befähigte Monomere.

3. Wässrige Zubereitungen gemäß Anspruch 1 oder 2, **dadurch gekennzeichnet, dass** Silan-funktionelle, zur Polymerisation befähigte Monomere IS1) sowie IIS1) Verbindungen der allgemeinen Formel (2)
(R¹O)₂R²Si-(CH=CH₂) (2)
in welcher
R¹ ein C₂- bis C₈-Alkylrest ist,
R² gleich (R¹O) oder ein C₁- bis C₅-Alkylrest ist,
und/oder Verbindungen der allgemeinen Formel (3)
(R¹O)₂R²Si(CH₂)ₘ-O(CO)-(CR³=CH₂) (3)
in welcher
R¹ ein C₂- bis C₈-Alkylrest ist,
R² gleich (R¹O) oder ein C₁- bis C₅-Alkylrest ist,
R³ gleich H oder CH₃ ist und
m 1 bis 4 ist,
sind.

4. Wässrige Zubereitungen gemäß Anspruch 1 oder 2, **dadurch gekennzeichnet, dass** Silan-funktionelle, zur Polymerisation befähigte Monomere IS1) sowie IIS1) ausgewählt sind aus der Gruppe Vinyltriethoxysilan, Vinyltrisisopropoxysilan, Vinyl-tris-(2-methoxythoxy)silan, Vinylmethyldiethoxysilan, Vinylmethyldiisopropoxysilan, Vinylethyldiethoxysilan, 3-(Triethoxysilyl)-propylmethacrylat oder 3-(Tris-isopropoxysilyl)-propylmethacrylat, Vinylphenyldiethoxysilan, Vinylphenylmethylethoxysilan oder Vinyltri-t-butoxysilan

5. Wässrige Zubereitungen enthaltend
A) ein Silan-modifiziertes Copolymerisat,
B) anorganische Partikel, welche gegebenenfalls oberflächenmodifiziert sind, mit einer mittels dynamischer Lichtstreuung in Dispersion bestimmten mittleren Partikelgröße (z-Mittelwert) von kleiner als 200 nm sowie
C) Wasser,
**dadurch gekennzeichnet, dass** Komponente A) ein Copolymerisat ist, das aufgebaut ist aus
I) einem hydroxyfunktionellen, hydrophoben Polymerisat, enthaltend als Aufbaumonomere
Ia) (Meth)-acrylsäureester mit C₁- bis C₁₈-Kohlenwasserstoffresten im Alkoholteil und/oder Vinylaromaten und/oder Vinylester,
Ib) hydroxyfunktionelle Monomere,
II) einem hydroxyfunktionellen, hydrophilen Polymerisat, enthaltend als Aufbaukomponenten
IIa) (Meth)-acrylsäureester mit C₁- bis C₁₈-Kohlenwasserstoffresten im Alkoholteil und/oder Vinylaromaten und/oder Vinylester,
IIb) hydroxyfunktionelle Monomere,
IIc) säurefunktionelle Monomere und
IIS2) Monomere, welche neben Silan-Gruppen mindestens eine Epoxid-Funktion enthalten.

6. Wässrige Zubereitungen gemäß Anspruch 5, **dadurch gekennzeichnet, dass** Monomere IIS2) ausgewählt sind aus der Gruppe γ-Glycidoxypropyltriethoxysilan, γ-Glycidoxypropyl-tris-isopropoxysilan, γ-Glycidoxypropyl-diethoxy-methylsilan, β-(3,4-Epoxycyclohexyl)-triethoxysilan oder β-(3,4-Epoxycyclohexyl)-tris-isopropoxysilan.

7. Wässrige Zubereitungen gemäß einem der Ansprüche 1, 2 oder 5, **dadurch gekennzeichnet, dass** Komponente B) Partikel sind ausgewählt aus der Gruppe der anorganischen Oxide, Mischoxide, Carbide, Boride und Nitride von Elementen der II bis IV Hauptgruppe und/oder Elemente der I bis VIII Nebengruppe des Periodensystems einschließlich der Lanthanide.

8. Wässrige Zubereitungen gemäß einem der Ansprüche 1, 2 oder 5, **dadurch gekennzeichnet, dass** Komponente B) anorganische Nanopartikel B) in kolloid disperser Form in organischen Lösungsmitteln (Organosole) oder in Wasser sind.

9. Wässrige Zubereitungen gemäß einem der Ansprüche 1, 2 oder 5, **dadurch gekennzeichnet, dass** Komponente B) anorganische Partikel in Form ihrer wässriger Zubereitungen sind.

10. Wässrige Zubereitungen gemäß einem der Ansprüche 1, 2 oder 5, **dadurch gekennzeichnet, dass** Komponente B) eine wässrige Zubereitung oberflächenmodifizierter, anorganischer Nanopartikel ist.

11. Wässrige Beschichtungsmittel enthaltend die wässrigen Zubereitungen gemäß einem der Ansprüche 1, 2 oder 5 sowie mindestens einen Vernetzer D).

12. Wässrige Zweikomponenten(2K)-Beschichtungsmittel enthaltend wässrige Zubereitungen gemäß einem der Ansprüche 1, 2 oder 5 sowie ein Polyisocyanat.

13. Verwendung der wässrigen Zubereitungen gemäß einem der Ansprüche 1, 2 oder 5 zur Herstellung von Klarlacken.

## Claims

1. An aqueous formulation comprising
A) a silane-modified copolymer;
B) optionally surface-modified inorganic particles having an average particle size (z-mean), as determined by means of dynamic light scattering in dispersion, of less than 200 nm; and
C) water;
wherein said component A) is a copolymer which is built up from
I) a hydroxy-functional hydrophobic polymer containing as builder monomers
Ia) (meth)acrylic acid esters having C₁- to C₁₈-hydrocarbon radicals in the alcohol part and/or vinylaromatics and/or vinyl esters;
Ib) hydroxy-functional monomers; and
IS1) silane-functional monomers capable of polymerization; and
II) a hydroxy-functional hydrophilic polymer containing as builder components
IIa) (meth)acrylic acid esters having C₁- to C₁₈-hydrocarbon radicals in the alcohol part and/or vinylaromatics and/or vinyl esters;
IIb) hydroxy-functional monomers; and
IIc) acid-functional monomers.

2. An aqueous formulation comprising
A) a silane-modified copolymer;
B) optionally surface-modified inorganic particles having an average particle size (z-mean), as determined by means of dynamic light scattering in dispersion, of less than 200 nm; and
C) water;
wherein said component A) is a copolymer which is built up from
I) a hydroxy-functional hydrophobic polymer containing as builder monomers
Ia) (meth)acrylic acid esters having C₁- to C₁₈-hydrocarbon radicals in the alcohol part and/or vinylaromatics and/or vinyl esters; and
Ib) hydroxy-functional monomers; and
II) a hydroxy-functional hydrophilic polymer containing as builder components
IIa) (meth)acrylic acid esters having C₁- to C₁₈-hydrocarbon radicals in the alcohol part and/or vinylaromatics and/or vinyl esters;
IIb) hydroxy-functional monomers;
IIc) acid-functional monomers; and
IIS1) silane-functional monomers capable of polymerization.

3. The aqueous formulation of claim 1 or 2, wherein said silane-functional monomers IS1) and IIS1), which are capable of polymerization, are compounds of the general formula (2)
(R¹O)₂R²Si-(CH=CH₂) (2)
wherein
R¹ is a C₂- to C₈-alkyl radical; and
R² is (R¹O) or a C₁- to C₅-alkyl radical;
and/or compounds of the general formula (3)
(R¹O)₂R²Si(CH₂)ₘ-O(CO)-(CR³=CH₂) (3)
wherein
R¹ is a C₂- to C₈-alkyl radical;
R² is (R¹O) or a C₁- to C₅-alkyl radical;
R³ is H or CH₃; and
m is 1 to 4.

4. The aqueous formulation of claim 1 or 2, wherein said silane-functional monomers IS1) and IIS1), which are capable of polymerization, are selected from the group consisting of vinyltriethoxysilane, vinyltrisisopropoxysilane, vinyl-tris-(2-methoxyethoxy)silane, vinylmethyldiethoxysilane, vinylmethyldiisopropoxysilane, vinylethyldiethoxysilane, 3-(triethoxysilyl)-propyl methacrylate or 3-(tris-isopropoxysilyl)-propyl methacrylate, vinylphenyldiethoxysilane, vinylphenylmethylethoxysilane, and vinyltri-t-butoxysilane.

5. An aqueous formulation comprising
A) a silane-modified copolymer;
B) optionally surface-modified inorganic particles having an average particle size (z-mean), as determined by means of dynamic light scattering in dispersion, of less than 200 nm; and
C) water;
wherein said component A) is a copolymer which is built up from
I) a hydroxy-functional hydrophobic polymer containing as builder monomers
Ia) (meth)acrylic acid esters having C₁- to C₁₈-hydrocarbon radicals in the alcohol part and/or vinylaromatics and/or vinyl esters;
Ib) hydroxy-functional monomers;
II) a hydroxy-functional hydrophilic polymer containing as builder components
IIa) (meth)acrylic acid esters having C₁- to C₁₈-hydrocarbon radicals in the alcohol part and/or vinylaromatics and/or vinyl esters;
IIb) hydroxy-functional monomers;
IIc) acid-functional monomers; and
IIS2) monomers which contain at least one epoxide function in addition to silane groups.

6. The aqueous formulation of claim 5, wherein said monomers IIS2) are selected from the group consisting of γ-glycidoxypropyltriethoxysilane, γ-glycidoxypropyl-tris-isopropoxysilane, γ-glycidoxypropyl-diethoxy-methylsilane, β-(3,4-epoxycyclohexyl)-triethoxysilane, and β-(3,4-epoxycyclohexyl)-tris-isopropoxysilane.

7. The aqueous formulation of one of claims 1, 2 and 5, wherein said component B) particles are selected from the group consisting of inorganic oxides, mixed oxides, carbides, borides, and nitrides of elements of main group II to IV and/or elements of subgroup I to VIII of the periodic table, including the lanthanides.

8. The aqueous formulation of one of claims 1, 2 and 5, wherein said component B) particles are inorganic nanoparticles B) in a colloidally disperse form in organic solvents (organosols) or in water.

9. The aqueous formulation of one of claims 1, 2 and 5, wherein said component B) inorganic particles are in the form of their aqueous formulations.

10. The aqueous formulation of one of claims 1, 2 and 5, wherein said component B) is an aqueous formulation of surface-modified inorganic nanoparticles.

11. An aqueous coating composition comprising the aqueous formulation of one of claims 1, 2 and 5 and at least one crosslinking agent D).

12. An aqueous two-component coating composition comprising the aqueous formulation of one of claims 1, 2 and 5 and a polyisocyanate.

13. Use of the aqueous formulation of one of claims 1, 2 and 5 for producing clear lacquers.

## Revendications

1. Préparations aqueuses, contenant :
A) un copolymère modifié par un silane,
B) des particules inorganiques, qui sont éventuellement modifiées en surface, ayant une taille de particule moyenne déterminée par diffusion de lumière dynamique en dispersion (valeur moyenne z) de moins de 200 nm, et
C) de l'eau ;
**caractérisées en ce que** le composant A) est un copolymère qui est formé à partir de :
I) un polymère hydrophobe à fonction hydroxy, contenant en tant que monomères constitutifs :
Ia) des esters de l'acide (méth)acrylique contenant des radicaux hydrocarbonés en C₁ à C₁₈ dans la partie alcool et/ou des composés aromatiques de vinyle et/ou des esters de vinyle,
Ib) des monomères à fonction hydroxy, et
IS1) des monomères à fonction silane, aptes à la polymérisation, ainsi que
II) un polymère hydrophile à fonction hydroxy, contenant en tant que composants constitutifs :
IIa) des esters de l'acide (méth)acrylique contenant des radicaux hydrocarbonés en C₁ à C₁₈ dans la partie alcool et/ou des composés aromatiques de vinyle et/ou des esters de vinyle,
IIb) des monomères à fonction hydroxy, et
IIc) des monomères à fonction acide.

2. Préparations aqueuses, contenant :
A) un copolymère modifié par un silane,
B) des particules inorganiques, qui sont éventuellement modifiées en surface, ayant une taille de particule moyenne déterminée par diffusion de lumière dynamique en dispersion (valeur moyenne z) de moins de 200 nm, et
C) de l'eau ;
**caractérisées en ce que** le composant A) est un copolymère qui est formé à partir de :
I) un polymère hydrophobe à fonction hydroxy, contenant en tant que monomères constitutifs :
Ia) des esters de l'acide (méth)acrylique contenant des radicaux hydrocarbonés en C₁ à C₁₈ dans la partie alcool et/ou des composés aromatiques de vinyle et/ou des esters de vinyle,
Ib) des monomères à fonction hydroxy, ainsi que
II) un polymère hydrophile à fonction hydroxy, contenant en tant que composants constitutifs :
IIa) des esters de l'acide (méth)acrylique contenant des radicaux hydrocarbonés en C₁ à C₁₈ dans la partie alcool et/ou des composés aromatiques de vinyle et/ou des esters de vinyle,
IIb) des monomères à fonction hydroxy,
IIc) des monomères à fonction acide, et
IIS1) des monomères à fonction silane, aptes à la polymérisation.

3. Préparations aqueuses selon la revendication 1 ou 2, **caractérisées en ce que** les monomères à fonction silane aptes à la polymérisation IS1) et IIS1) sont des composés de la formule générale (2) :
(R¹O)₂R²Si-(CH=CH₂) (2)
dans laquelle
R¹ représente un radical alkyle en C₂ à C₈,
R² représente (R¹O) ou un radical alkyle en C₁ à C₅,
et/ou des composés de formule générale (3)
(R¹O)₂R²Si(CH₂)ₘ-O(CO)-(CR³=CH₂) (3)
dans laquelle
R¹ représente un radical alkyle en C₂ à C₈,
R² représente (R¹O) ou un radical alkyle en C₁ à C₅,
R³ représente H ou CH₃, et
m représente 1 à 4.

4. Préparations aqueuses selon la revendication 1 ou 2, **caractérisées en ce que** les monomères à fonction silane aptes à la polymérisation IS1) et IIS1) sont choisis dans le groupe constitué par le vinyltriéthoxysilane, le vinyltrisisopropoxysilane, le vinyl-tris-(2-méthoxyéthoxy)silane, le vinylméthyldiéthoxysilane, le vinyméthyldiisopropoxysilane, le vinyléthyldiéthoxysilane, le méthacrylate de 3-(triéthoxysilyl)-propyle ou le méthacrylate de 3-(tris-isopropoxysilyl)-propyle, le vinylphényldiéthoxysilane, le vinylphénylméthyléthoxysilane ou le vinyltri-t-butoxysilane.

5. Préparations aqueuses, contenant :
A) un copolymère modifié par un silane,
B) des particules inorganiques, qui sont éventuellement modifiées en surface, ayant une taille de particule moyenne déterminée par diffusion de lumière dynamique en dispersion (valeur moyenne z) de moins de 200 nm, et
C) de l'eau ;
**caractérisées en ce que** le composant A) est un copolymère qui est formé à partir de :
I) un polymère hydrophobe à fonction hydroxy, contenant en tant que monomères constitutifs :
Ia) des esters de l'acide (méth)acrylique contenant des radicaux hydrocarbonés en C₁ à C₁₈ dans la partie alcool et/ou des composés aromatiques de vinyle et/ou des esters de vinyle,
Ib) des monomères à fonction hydroxy,
II) un polymère hydrophile à fonction hydroxy, contenant en tant que composants constitutifs :
IIa) des esters de l'acide (méth)acrylique contenant des radicaux hydrocarbonés en C₁ à C₁₈ dans la partie alcool et/ou des composés aromatiques de vinyle et/ou des esters de vinyle, IIb) des monomères à fonction hydroxy,
IIc) des monomères à fonction acide, et
IIS2) des monomères qui contiennent au moins une fonction époxy en plus des groupes silane.

6. Préparations aqueuses selon la revendication 5, **caractérisées en ce que** les monomères IIS2) sont choisis dans le groupe constitué par le γ-glycidoxypropyltriéthoxysilane, le γ-glycidoxypropyl-tris-isopropoxysilane, le γ-glycidoxypropyl-diéthoxy-méthylsilane, le β-(3,4-époxycyclohexyl)-triéthoxysilane ou le β-(3,4-époxycyclohexyl)-tris-isopropoxysilane.

7. Préparations aqueuses selon l'une quelconque des revendications 1, 2 ou 5, **caractérisées en ce que** le composant B) consiste en des particules choisies dans le groupe constitué par les oxydes inorganiques, les oxydes mixtes, les carbures, les borures et les nitrures d'éléments des groupes principaux II à IV et/ou d'éléments des groupes de transition I à VIII du tableau périodique, y compris les lanthanides.

8. Préparations aqueuses selon l'une quelconque des revendications 1, 2 ou 5, **caractérisées en ce que** le composant B) consiste en des nanoparticules inorganiques B) sous forme dispersée colloïdalement dans des solvants organiques (organosols) ou dans de l'eau.

9. Préparations aqueuses selon l'une quelconque des revendications 1, 2 ou 5, **caractérisées en ce que** le composant B) consiste en des particules inorganiques sous la forme de leurs préparations aqueuses.

10. Préparations aqueuses selon l'une quelconque des revendications 1, 2 ou 5, **caractérisées en ce que** le composant B) consiste en une préparation aqueuse de nanoparticules inorganiques modifiées en surface.

11. Agents de revêtement aqueux contenant les préparations aqueuses selon l'une quelconque des revendications 1, 2 ou 5, ainsi qu'au moins un agent de réticulation D).

12. Agents de revêtement aqueux bicomposants (2K) contenant des préparations aqueuses selon l'une quelconque des revendications 1, 2 ou 5, ainsi qu'un polyisocyanate.

13. Utilisation des préparations aqueuses selon l'une quelconque des revendications 1, 2 ou 5 pour la fabrication de vernis transparents.
